# FASCICULE DE BREVET EUROPEEN

(11) **EP 1 574 125 B1**
(45) Date de publication et mention de la délivrance du brevet: **09.04.2008**
(21) Numéro de dépôt: 05352004.5
(22) Date de dépôt: 25.02.2005
(51) Int. Cl.: A01G 3/037, B26B 15/00, G05F 5/00

(54) **Dispositif de coupe electroniquement asservi**
Elektronisch geregeltes Schneidwerkzeug
Electronically controlled cutting tool

(30) Priorité: 11.03.2004 FR 0402533
(43) Date de publication de la demande: 14.09.2005
(73) Titulaire: Infaco S.A.S, 81140 Cahuzac sur Vere (FR)
(72) Inventeur: Delmas, Daniel, 81140 Cahuzac sur Vere (FR)
(74) Mandataire: Ravina, Bernard

(56) Documents cités:
- FR-A- 2 770 372
- US-A- 4 359 821
- US-A- 5 002 135

## Description

La présente invention concerne un dispositif de coupe électroniquement asservi. Elle s'applique, en particulier, à des sécateurs utilisable en agriculture, arboriculture, viticulture ou horticulture, pour travaux de taille et/ou de récolte et à des cisailles à tôle. La présente invention concerne tous les outils coupants ou tranchants dans lesquels la mise en fonctionnement et l'arrêt sont effectués électriquement, la source d'énergie actionnant les organes de coupe pouvant être autre qu'électrique et, par exemple pneumatique ou hydraulique.

On connaît des sécateurs électriques, dans lesquels la lame mobile du sécateur se déplace d'une butée à l'autre sans possibilité d'arrêt dans une position donnée ni de commande de déplacements de cette lame mobile d'amplitude limitée.

Ces sécateurs présente notamment l'inconvénient qu'il n'est pas possible de commander la vitesse et l'amplitude des mouvements de la lame mobile avec la vitesse et l'amplitude des mouvements de la gâchette, de sorte que les mouvements de cette gâchette provoquent la fermeture ou l'ouverture totale et plus ou moins brusque des lames.

Cet inconvénient est source de danger pour l'utilisateur car il lui est impossible de contrôler le mouvement de la lame fixe lorsque la gâchette est actionnée.

Un autre inconvénient découle du fait que ces sécateurs doivent incorporer au moins un systèmes électriques ou électroniques de fin de course, ce complique leur construction et impose à l'utilisateur des secousses générées par la présence d'un tel système, en fin de course d'ouverture ou de fermeture.

Un autre inconvénient découle du fait qu'il est très difficile de dégager le sécateur lorsque ses lames se trouvent coincées sur une pièce de bois trop épaisse.

Le document FR 2 614 568 (Pellenc) porte sur un mode particulier de réalisation d'un sécateur électrique à coupe progressive, c'est-à-dire permettant l'arrêt de la coupe en une position de mâchoires donnée et la commande de déplacements de lame jusqu'à une position choisie par l'utilisateur. Dans ce document, la gâchette et un dispositif de commande électrique sont assujettis à une pièce mobile d'entraînement de la lame mobile, dont ils suivent les déplacements. Plus précisément, il est prévu une pièce mobile montée sur rail qui est déplacée par la gâchette et porte un aimant dont la position est détectée par une sonde. Ce dispositif présente les défauts suivants : d'une part sa construction est complexe et onéreuse et, d'autre part, le mouvement de la main de l'utilisateur est gêné par la pièce mobile d'entraînement de la lame mobile dont la gâchette suit le déplacement. De plus, l'appréciation de la position de la lame mobile est malaisée et la vitesse de réaction du dispositif est réduite.

La présente invention vise à remédier à ces inconvénients.

A cet effet, la présente invention vise, selon un premier aspect, un dispositif de coupe comportant au moins une lame mobile mise en déplacement par un moteur électrique, sous la commande d'une gâchette, caractérisé en ce qu'il comporte :
- un aimant solidaire de la gâchette,
- un capteur à effet Hall qui mesure le champ magnétique de l'aimant supporté par la gâchette et qui émet un signal représentatif de la position instantanée de la gâchette et
- un circuit de commande du moteur électrique adapté à commander le fonctionnement dudit moteur en fonction dudit signal représentatif de la position instantanée de la gâchette,
le moteur provoquant l'écartement de chaque dite lame mobile lorsque la gâchette se déplace dans un premier sens de déplacement et le resserrement de chaque dite lame mobile lorsque la gâchette se déplace dans un deuxième sens de déplacement opposé au premier sens de déplacement.

Grâce à ces dispositions, l'utilisateur peut déplacer la gâchette sans ressentir de gêne de la part du sécateur, la vitesse de déplacement de la lame peut être commandée en fonction de la vitesse de déplacement de la gâchette et la réaction du dispositif à la commande manuelle peut être plus rapide. De plus, le sécateur selon l'invention permet de commander et de moduler avec une grande précision, directement avec la gâchette, la vitesse de fermeture des lames qu'il est possible de maintenir ouvertes dans n'importe quelle position intermédiaire entre leur ouverture maximum et leur fermeture.

Le dispositif de coupe électroniquement asservi selon la présente invention présente donc à la fois la puissance des matériels électriques et la facilité d'utilisation des sécateurs à main sans moteur, tout en étant très léger et peu encombrant.

De plus, le capteur ne présente aucune usure puisqu'il n'y a pas de pièce mobile en contact avec le capteur et le temps moyen entre pannes (MTBF) est supérieur à dix ans.

De plus, le dispositif de coupe électroniquement asservi objet de la présente invention n'a pas besoin de mettre en oeuvre de système de fin de course, ce qui simplifie sa construction et évite les secousses générées par ce système, en fin de course.

Enfin, le dispositif de coupe objet de la présente invention est très compact, présente peu de composants et il est léger.

Selon des caractéristiques particulières, le dispositif de coupe comporte un aimant fixe par rapport au capteur à effet Hall, le champ magnétique de l'aimant fixe interférant avec le champ magnétique de l'aimant supporté par la gâchette.

Grâce à ces dispositions, le fonctionnement du dispositif est indépendant des dispersions mécaniques de positionnement respectif de la gâchette, de l'aimant supporté par la gâchette et du capteur.

Selon des caractéristiques particulières, le capteur est positionné entre les deux aimants et les deux aimants sont montés en opposition, c'est-à-dire que leur pôle en regard l'un de l'autre sont identiques.

Grâce à ces dispositions, la courbe de réponse du capteur par rapport à la position de l'aimant supporté par la gâchette est plus linéaire. De plus, puisque les aimants se repoussent, la position voulue par l'utilisateur ne risque pas d'être perturbée par une attraction entre les aimants.

Selon des caractéristiques particulières, le capteur et les aimants sont positionnés de telle façon que le champ magnétique traversant le capteur varie d'un facteur au moins égal à cinq lorsque la gâchette se déplace entre ses positions extrêmes.

Selon des caractéristiques particulières, le moteur électrique est de type à collecteur.

Selon des caractéristiques particulières, le circuit de commande, commande le moteur électrique en courant.

Grâce à ces dispositions, on évite les risques de destruction thermique du moteur en cas de blocage, notamment blocage de la lame, tout en disposant d'une puissance de coupe élevée.

Selon des caractéristiques particulières, le circuit de commande est adapté à piloter le moteur électrique par l'intermédiaire d'un pilotage par hacheur.

Selon des caractéristiques particulières, le circuit de commande émet un signal d'alimentation du moteur électrique et est adapté à effectuer une mesure de vitesse du moteur par traitement dudit signal d'alimentation.

Grâce à ces dispositions, il n'est pas nécessaire de prévoir un capteur de position ou de vitesse de la lame ou du moteur, ce qui rend le dispositif de coupe encore plus simple, fiable et peu onéreux.

Selon des caractéristiques particulières, le circuit de commande est adapté à effectuer ladite mesure de vitesse pendant des intervalles de temps où le courant est nul, dans les périodes de hachage.

Grâce à ces dispositions, la mesure de la vitesse n'est pas effectuée lorsque le fonctionnement du hacheur empêche de disposer de façon immédiate de cette information. Ladite mesure est réalisée de façon différente sur le moteur sur les entrées de convertisseur analogique-numérique d'un microcontrôleur.

Selon des caractéristiques particulières, le circuit de commande est adapté à intégrer ladite mesure de vitesse dans le temps pour déterminer la position instantanée du moteur.

Selon des caractéristiques particulières, le circuit de commande est adapté à comparer ladite position instantanée avec une valeur consigne qui dépend du signal délivré par le capteur à effet Hall.

Selon des caractéristiques particulières, le circuit de commande est adapté à effectuer une correction de type proportionnel-intégral-dérivée sur le résultat de ladite comparaison.

Grâce à chacune de ces dispositions, la progressivité de la coupe, son arrêt ou l'éloignement des lames de l'outil de coupe sont aisément et précisément commandées par la main de l'utilisateur.

D'autres avantages, buts et caractéristiques de la présente invention ressortiront de la description qui va suivre, faite dans un but explicatif et nullement limitatif en regard des dessins annexés dans lesquels :
- la figure 1 représente, schématiquement et en coupe, un dispositif de coupe électroniquement asservi objet de la présente invention,
- la figure 2 représente, schématiquement, un circuit électronique de commande illustré en figure 1 et
- la figure 3 représente, schématiquement, un diagramme temporel de commande moteur et de mesure de vitesse de moteur.

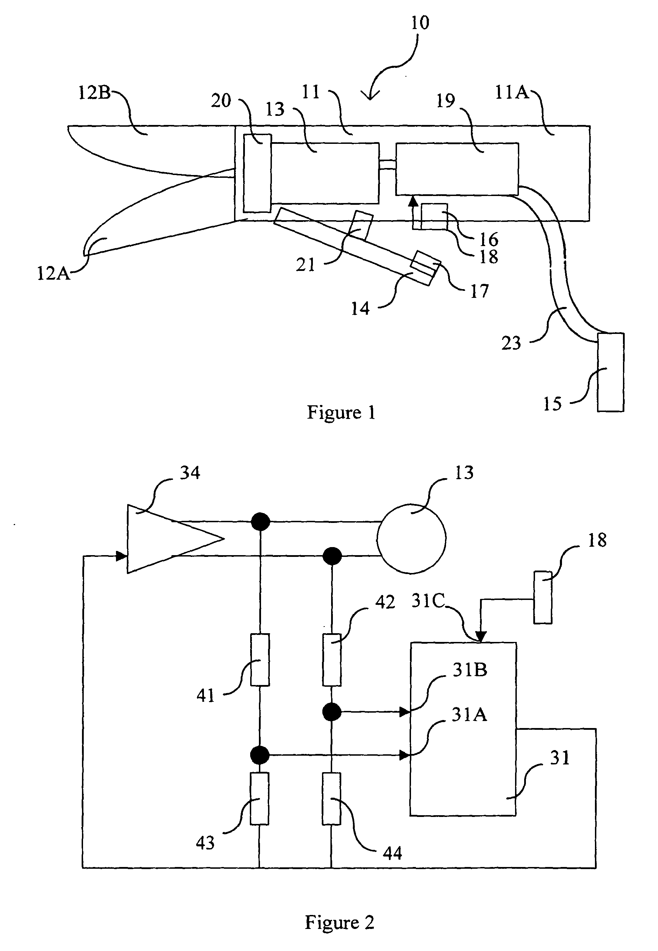

On observe, en figure 1, un outil de coupe 10, tel que, par exemple, un sécateur motorisé, qui comporte des organes de coupe 12A et 12B sous forme de lames de coupe (le mot "lame" recouvrant aussi la notion de crochet) actionnées par un organe moteur 13, à partir de l'actionnement d'une gâchette 14 prévue sur l'outil 10. L'action manuelle sur la gâchette 14, possédant une aptitude de pivotement, assure la commande de l'organe moteur 13, par l'intermédiaire d'un circuit électronique 19 alimenté par une source d'énergie 15.

Ce sécateur 10 comprend un corps évidé 11 dont la partie arrière 11 a est conformée pour servir de poignée et sur la partie antérieure duquel est fixé le crochet ou lame fixe 12B de la tête de coupe. Ce corps évidé 11 est, par exemple, exécuté en deux parties assemblées par vissage, suivant un plan longitudinal. Sur le crochet 12B, est articulée, au moyen d'un axe (non représenté), la lame mobile 12A de ladite tête de coupe.

Dans la partie arrière 11 a du corps 11 est installé l'organe moteur 13, ici un moteur électrique à collecteur et à courant continu, accouplé à un réducteur 20 disposé à l'avant dudit moteur électrique 13. La sortie du réducteur 20 est accouplée à la lame mobile 12A.

La source d'énergie 15 se présente sous la forme de batteries électriques (non représentées, par exemple logées dans une gaine sous forme de ceinture que l'utilisateur porte à la taille) reliées au circuit électronique 19 par un câble électrique souple 23.

Un ressort de rappel 21 rappelle la gâchette 14 en position ouverte.

Pour capter la position de la gâchette 14, un aimant permanent 17 est porté par la gâchette 14 et un capteur à effet Hall 18 est fixé au corps 11 de l'outil de coupe 10.

De manière préférentielle, un deuxième aimant permanent 16 est fixé au corps 11 de l'outil de coupe 10 et les deux aimants permanents 16 et 17 sont inversement orientés, c'est-à-dire que leurs pôles qui sont en regard présentent la même polarité. Le capteur à effet Hall 18 est situé, en permanence, entre les deux aimants 16 et 17. Par exemple, le capteur à effet Hall 18 est placé sur la face de l'aimant 16 qui se trouve en regard de la gâchette 14. Le champ magnétique de l'aimant fixe 16 interférant avec le champ magnétique de l'aimant 17 supporté par la gâchette 14. Ainsi, le signal sortant de capteur à effet Hall 18 est moins sensible aux dispersions mécaniques de positionnement respectif de la gâchette 14, de l'aimant 17 supporté par la gâchette 14 et du capteur à effet Hall 18.

Ainsi, préférentiellement, ce nouvel outil de coupe 10, objet de la présente invention, permet une coupe progressive, électroniquement asservie, basée sur le principe de l'utilisation d'un capteur à effet Hall 18 mettant en oeuvre deux aimants permanents 16 et 17, l'un des aimants, 16, étant fixe et l'autre, 17, étant mobile avec la gâchette 14 de l'outil de coupe ou sécateur 10. Par traitement du signal sortant de ce capteur 18, l'électronique appropriée du circuit électronique 19 asservit la position de la lame mobile 12A à la position de la gâchette 14.

Du fait que les aimants sont montés en opposition, la courbe de réponse du capteur à effet Hall 18 par rapport à la position de l'aimant supporté 17 par la gâchette 14 est plus linéaire. De plus, puisque les aimants 16 et 17 se repoussent, la position voulue par l'utilisateur ne risque pas d'être perturbée par une attraction entre les aimants.

Les positions respectives du capteur à effet Hall 18 et des aimants 16 et 17 assurent que le champ magnétique traversant le capteur à effet Hall 18 varie d'un facteur au moins égal à cinq lorsque la gâchette 14 se déplace entre ses positions extrêmes.

Le capteur à effet Hall 18, connu en soi, permet de transformer une valeur de champ magnétique en une tension proportionnelle et ceci sans contact matériel, ce qui évite les risques d'usure. Le capteur à effet Hall 18 est relié au circuit électronique 19.

Le circuit électronique 19 est représenté en figure 2, relié au moteur électrique 13 à collecteur et à courant continu et au capteur à effet Hall 18. Il comporte un circuit hacheur 34 et un microcontrôleur 31 comportant un convertisseur analogique-numérique (non représenté) et des entrées de convertisseur analogique numérique 31A, 31B et 31 C, une mémoire de programme (non représentée) et une mémoire non volatile (non représentée).

Le microcontrôleur 31 reçoit, sur l'entrée de convertisseur analogique-numérique 31C, le signal émis par le capteur à effet Hall 18.

Le microcontrôleur 31 commande le moteur électrique 13 en courant par l'intermédiaire d'un pilotage par commande du hacheur 34, en fonction du signal qu'il reçoit du capteur à effet Hall 18.

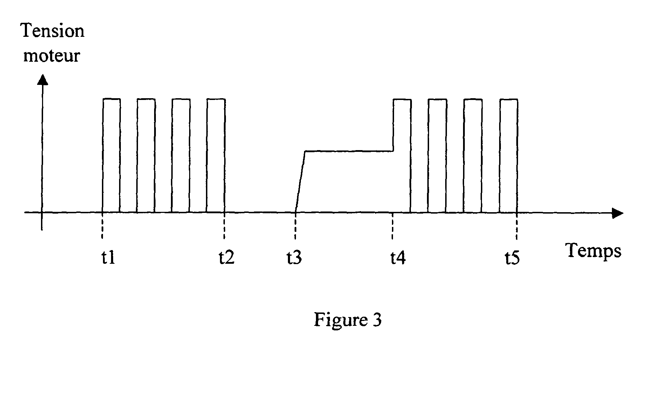

Préférentiellement, le microcontrôleur 31 est adapté à effectuer une mesure de vitesse du moteur par traitement du signal d'alimentation du moteur 13, pendant des intervalles de temps particuliers dans les périodes de hachage (voir diagramme temporelle illustré en figure 3). A cet effet, un pont diviseur de tension formé de quatre résistance 41 à 44 est relié, en entrée aux entrées du moteur 13 et, en sortie, aux entrées de convertisseur analogique-numérique 31A et 31B.

On observe, en figure 3, la tension en entrée du moteur en fonction du temps. Dans une première phase, entre les instants t1 et t2, la tension est hachée par le hacheur 34. Dans une deuxième phase, entre les instants t2 et t3, le courant est annulé. Dans une troisième phase, entre les instants t3 et t4, la tension en entrée du moteur est représentative de la force contre électromotrice ("FCEM") appliquée par le moteur 13. C'est au cours de cette phase que le microcontrôleur 31 effectue une mesure de vitesse du moteur 13, par traitement de la tension aux bornes du moteur 13. Puis, une nouvelle phase de hachage a lieu, entre les instants t4 et t5.

Le microcontrôleur 31 intègre la mesure de vitesse dans le temps pour déterminer la position instantanée du moteur et compare ladite position instantanée avec une valeur consigne qui dépend du signal délivré par le capteur à effet Hall 18. Puis, le microcontrôleur 31 effectue une correction de type proportionnel-intégral-dérivée sur le résultat de ladite comparaison.

Le sécateur précédemment décrit fonctionne de la manière suivante : lorsqu'il n'est pas utilisé, les lames 12A et 12B sont fermées. Un interrupteur de sécurité 22 commande la mise sous tension du circuit électronique 19 et l'ouverture des lames 12A et 12B : lorsque le circuit électronique 19 est alimenté, le moteur 13 se met en marche et entraîne la lame 12A en position ouverte. Dans cette situation, les lames 12A et 12B du sécateur 10 se trouvent en position d'ouverture complète.

Pour obtenir la fermeture des lames 12A et 12B et l'action de coupe, l'utilisateur appuie sur la gâchette 14, ce qui entraîne une variation du signal sortant du capteur à effet Hall 18. Le moteur 13, piloté par ce signal et la carte électronique 19, se remet en marche, entraînant le pivotement de la lame mobile 12A en direction de sa position de fermeture.

Lorsqu'on relâche la gâchette 14, celle-ci se trouve pivotée vers l'avant, sous l'action du ressort 20 et le signal émis par le capteur à effet Hall 18 présente une variation opposée, permettant la réouverture des lames 12A et 12B.

On observe que les mouvements de la lame mobile 12A sont totalement asservis aux mouvements de la gâchette 14, ce qui assure une progressivité totale lors de l'ouverture et, surtout, lors de la fermeture et de la coupe. De plus, la lame mobile 12A peut être immobilisée avec précision dans une position intermédiaire quelconque, aussi bien lors de la phase d'ouverture que lors de la phase de fermeture. A cet effet, l'utilisateur immobilise manuelle la gâchette 14 dans une position intermédiaire.

On précise que si l'on a illustré, à titre d'exemple, un sécateur 10 comportant une seule lame mobile 12A, l'invention est également applicable aux outils comprenant deux lames de coupe ou autres organes actifs mobiles, moyennant une simple adaptation de la tête de travail de ces outils.

De plus, le dispositif d'asservissement en position peut être utilisé en combinaison avec d'autres systèmes de transmission ou de transformation de mouvement connus tels que : engrenage, bielle-manivelle, came, etc.

En variante, le moteur 13 est remplacé par un moteur pas-à-pas.

Il va de soi que la présente invention peut recevoir tous aménagements et variantes du domaine des équivalences techniques sans pour autant sortir du cadre du présent brevet.

## Revendications

1. - Dispositif de coupe (10) comportant au moins une lame mobile (12A) mise en déplacement par un moteur électrique (13), sous la commande d'une gâchette (14), **caractérisé en ce qu**'il comporte :
- un aimant (17) solidaire de la gâchette (14),
- un capteur à effet Hall (18) qui mesure le champ magnétique de l'aimant supporté par la gâchette et qui émet un signal représentatif de la position instantanée de la gâchette et
- un circuit de commande (19) du moteur électrique adapté à commander le fonctionnement dudit moteur (13) en fonction dudit signal représentatif de la position instantanée de la gâchette (14);
le moteur (13) provoquant l'écartement de chaque dite lame mobile (12A) lorsque la gâchette (14) se déplace dans un premier sens de déplacement et le resserrement de chaque dite lame mobile (12A) lorsque la gâchette (14) se déplace dans un deuxième sens de déplacement opposé au premier sens de déplacement.

2. - Dispositif selon la revendication 1, **caractérisé en ce qu**'il comporte un aimant (16) fixe par rapport au capteur à effet Hall (18), le champ magnétique de l'aimant fixe (16) interférant avec le champ magnétique de l'aimant (17) supporté par la gâchette.

3. - Dispositif selon la revendication 2, **caractérisé en ce que** le capteur (18) est positionné entre les deux aimants (16,17) et les deux aimants sont montés en opposition, c'est-à-dire que leur pôle en regard l'un de l'autre sont identiques.

4. - Dispositif selon l'une quelconque des revendications 1 à 3, **caractérisé en ce que** le capteur (18) et les aimants (16,17) sont positionnés de telle façon que le champ magnétique traversant le capteur varie d'un facteur au moins égal à cinq lorsque la gâchette se déplace entre ses positions extrêmes.

5. - Dispositif selon l'une quelconque des revendications 1 à 4, **caractérisé en ce que** le moteur électrique (13) est de type à collecteur.

6. - Dispositif selon l'une quelconque des revendications 1 à 5, **caractérisé en ce que** le circuit de commande (19) commande le moteur électrique (13) en courant.

7. - Dispositif selon l'une quelconque des revendications 1 à 6, **caractérisé en ce qu**e le circuit de commande (19) est adapté à piloter le moteur électrique (13) par l'intermédiaire d'un pilotage par hacheur (34).

8. - Dispositif selon l'une quelconque des revendications 1 à 7, **caractérisé en ce que** le circuit de commande (19) émet un signal d'alimentation du moteur électrique et est adapté à effectuer une mesure de vitesse du moteur par traitement dudit signal d'alimentation.

9. - Dispositif selon les revendications 7 et 8, **caractérisé en ce que** le circuit de commande (19) est adapté à effectuer ladite mesure de vitesse pendant des intervalles de temps où le courant est nul, dans les périodes de hachage.

10. - Dispositif selon l'une quelconque des revendications 8 ou 9, **caractérisé en ce que**
le circuit de commande (19) est adapté à intégrer ladite mesure de vitesse dans le temps pour déterminer la position instantanée du moteur.

11. - Dispositif selon la revendication 10, **caractérisé en ce que** le circuit de commande (19) est adapté à comparer ladite position instantanée avec une valeur consigne qui dépend du signal délivré par le capteur à effet Hall (18).

12. - Dispositif selon la revendication 11, **caractérisé en ce que** le circuit de commande (19) est adapté à effectuer une correction de type proportionnel-intégral-dérivée sur le résultat de ladite comparaison.

## Claims

1. A cutting device (10) comprising at least one movable blade (12A) set in motion by an electric motor (13), under the control of a follower (14), **characterised in that** it comprises:
- a magnet (17) secured to the follower (14),
- a Hall effect sensor (18) that measures the magnetic field of the magnet supported by the follower and that emits a signal representing the instantaneous position of the follower, and
- a control circuit (19) for the electric motor adapted to control the functioning of said motor (13) according to said signal representing the instantaneous position of the follower (14),
the motor (13) causing the separation of each said movable blade (12A) when the follower (14) moves in a first direction of movement and the closing of each said movable blade (12A) when the follower (14) moves in a second direction of movement opposite to the first direction of movement.

2. A device according to claim 1, **characterised in that** it comprises a magnet (16) fixed with respect to the Hall effect sensor (18), the magnetic field of the fixed magnet (16) interfering with the magnetic field of the magnet (17) supported by the follower.

3. A device according to claim 2, **characterised in that** the sensor (18) is positioned between the two magnets (16; 17) and the two magnets are mounted in opposition, that is to say their poles facing each other are identical.

4. A device according to any one of claims 1 to 3, **characterised in that** the sensor (18) and the magnets (16; 17) are positioned so that the magnetic field passing through the sensor varies by a factor of at least five when the follower moves between its extreme positions.

5. A device according to any one of claims 1 to 4, **characterised in that** the electric motor (13) is of the collector type.

6. A device according to any one of claims 1 to 5, **characterised in that** the control circuit (19) controls the electric motor (13) with respect to current.

7. A device according to any one of claims 1 to 6, **characterised in that** the control circuit (19) is adapted to control the electric motor (13) by means of a control by chopper (34).

8. A device according to any one of claims 1 to 7, **characterised in that** the control circuit (19) emits a signal supplying the electric motor and is adapted to perform a motor speed measurement by processing said supply signal.

9. A device according to claims 7 and 8, **characterised in that** the control circuit (19) is adapted to perform said speed measurement during intervals of time when the current is zero, in the chopping periods.

10. A device according to either one of claims 8 or 9, **characterised in that** the control circuit (19) is adapted to integrate said speed measurement over time in order to determine the instantaneous position of the motor.

11. A device according to claim 10, **characterised in that** the control circuit (19) is adapted to compare said instantaneous position with a set value that depends on the signal delivered by the Hall effect sensor (18).

12. A device according to claim 11, **characterised in that** the control circuit (19) is adapted to make a correction of the proportional-integral-derivative type on the result of said comparison.

## Patentansprüche

1. Schneidwerkzeug (10) mit mindestens einem beweglichen Blatt (12A), das durch einen Elektromotor (13) unter der Steuerung durch einen Drücker (14) verschoben wird, **dadurch gekennzeichnet, dass** es aufweist:
- einen Magneten (17), der fest mit dem Drücker (14) verbunden ist,
- einen Hall-Effektfühler (18), der das Magnetfeld des vom Drücker getragenen Magneten misst und ein Signal aussendet, das repräsentativ für die augenblickliche Stellung des Drückers ist, und
- einen Steuerkreis (19) des Elektromotors, der dafür eingerichtet ist, den Betrieb des Motors (13) in Abhängigkeit von dem für die augenblickliche Stellung des Drückers (14) repräsentativen Signal zu steuern,
wobei der Motor (13) das Entfernen (Öffnen) des beweglichen Blatts (12A) bewirkt, wenn der Drücker (14) sich in einer ersten Verschiebungsrichtung verschiebt, und das Anziehen (Schließen) des beweglichen Blatts (12A) bewirkt, wenn der Drücker (14) sich in einer zweiten Verschiebungsrichtung verschiebt, die der ersten Verschiebungsrichtung entgegengesetzt ist.

2. Schneidwerkzeug nach Anspruch 1, **dadurch gekennzeichnet, dass** es einen Magneten (16) aufweist, der bezüglich des Hall-Effektfühlers (18) fest ist, wobei das Magnetfeld des festen Magneten (16) mit dem Magnetfeld des vom Drücker getragenen Magneten (17) interferiert.

3. Schneidwerkzeug nach Anspruch 2, **dadurch gekennzeichnet, dass** der Fühler (18) zwischen den zwei Magneten (16, 17) angeordnet ist und die zwei Magnete entgegengesetzt montiert sind, d.h. dass ihre einander gegenüberliegenden Pole identisch sind.

4. Schneidwerkzeug nach einem der Ansprüche 1 bis 3, **dadurch gekennzeichnet, dass** der Fühler (18) und die Magnete (16, 17) so angeordnet sind, dass das den Fühler durchsetzende Magnetfeld sich um einen Faktor von mindestens gleich fünf verändert, wenn der Drücker sich zwischen seinen Endstellungen verschiebt.

5. Schneidwerkzeug nach einem der Ansprüche 1 bis 4, **dadurch gekennzeichnet, dass** der Elektromotor (13) vom Typ Kollektormotor ist.

6. Schneidwerkzeug nach einem der Ansprüche 1 bis 5, **dadurch gekennzeichnet, dass** der Steuerkreis (19) den Elektromotor (13) über den Strom steuert.

7. Schneidwerkzeug nach einem der Ansprüche 1 bis 6, **dadurch gekennzeichnet, dass** der Steuerkreis (19) dafür eingerichtet ist, den Elektromotor (13) mittels einer Steuerung durch Zerhacker (34) zu steuern.

8. Schneidwerkzeug nach einem der Ansprüche 1 bis 7, **dadurch gekennzeichnet, dass** der Steuerkreis (19) ein Signal zur Speisung des Elektromotors aussendet und dafür eingerichtet ist, eine Messung der Geschwindigkeit des Motors durch Behandlung dieses Speisesignals zu bewirken.

9. Schneidwerkzeug nach den Ansprüchen 7 und 8, **dadurch gekennzeichnet, dass** der Steuerkreis (19) dafür eingerichtet ist, die Messung der Geschwindigkeit in den Zerhackerperioden während Zeitintervallen durchzuführen, wo der Strom Null ist.

10. Schneidwerkzeug nach einem der Ansprüche 8 oder 9, **dadurch gekennzeichnet, dass** der Steuerkreis (19) dafür eingerichtet ist, die Messung der Geschwindigkeit in der Zeit zu integrieren, um die augenblickliche Stellung des Motors zu bestimmen.

11. Schneidwerkzeug nach Anspruch 10, **dadurch gekennzeichnet, dass** der Steuerkreis (19) dafür eingerichtet ist, die augenblickliche Stellung mit einem Einstellwert zu vergleichen, der von dem vom Hall-Effektfühler (18) gelieferten Signal abhängt.

12. Schneidwerkzeug nach Anspruch 11, **dadurch gekennzeichnet, dass** der Steuerkreis (19) dafür eingerichtet ist, eine Korrektur vom Typ Proportional-Integral-Differentialquotient am Resultat des Vergleichs durchzuführen.
